# EUROPEAN PATENT APPLICATION

(11) **EP 3 576 421 A1**
(43) Date of publication of application: **04.12.2019**
(21) Application number: 18185801.0
(22) Date of filing: 26.07.2018
(51) Int. Cl.: H04N 21/63, H04L 12/18, H04L 29/06, H04N 7/14, H04N 7/15

(54) **SYSTEM AND METHOD FOR WIRELESS AUDIOVISUAL TRANSMISSION**

(30) Priority: 01.06.2018 TW 107119068
(71) Applicant: NetKlass Technology Inc., Chupei City Hsinchu County 302 (TW)
(72) Inventor: Lee, Ming Tang, 302 Chupei City (TW)
(74) Representative: Gee, Steven William

(57) **Abstract**

The invention provides a wireless audiovisual transmission system and method, applicable to conference presentation and/or real-time game environment. In each transmitting device of at least one transmitting end, a user can use gesture or voice to control each transmitting device, for operating the transmitting device, performing VIP setting or VIP deactivation. If the receiving device of the receiving end receives a VIP setting of a specific transmitting end of the at least one transmitting end, the receiving device preferentially decompresses the audiovisual signal outputted by the transmitting device of the specific transmitting end, and preferentially transmits decompressed the audiovisual signal to a display device for display, until the receiving device at the receiving end receives a VIP deactivation; if no VIP setting is received, the receiving device decompresses the at least a received audiovisual signal from at least one transmitting end according to a priority order for displaying.

## Description

### CROSS-REFERENCE TO RELATED APPLICATION

The present application is based on, and claims priority form, Taiwan Patent Application No. 107119068, filed June 1, 2018, the disclosure of which is hereby incorporated by reference herein in its entirety.

### TECHNICAL FIELD

The technical field generally relates to a wireless audiovisual (AV) transmission system and method, and in particular, to a wireless audiovisual transmission system and method applicable to a conference presentation and/or a real-time game environment, if receiving device received a very-important-person (VIP) setting of a transmitting device of a specific transmitting end of the at least one transmitting end, the receiving device preferentially decompresses the audiovisual signal outputted by the transmitting device of the specific transmitting end, and preferentially transmits decompressed the audiovisual signal to a display device for display.

### BACKGROUND

With the popularity of wireless transmission, the wireless audiovisual transmission has improved the convenience of audiovisual transmission. However, since wireless audiovisual transmission has a delay time requirement in application and the current technology cannot adjust the wireless transmission performance to the optimal, the compromise is to use the H.264 technology with higher compression ratio to reduce the bandwidth requirement, which will cause too much delay. It is imperative to devise a wireless audiovisual transmission technology able to use compressed audiovisual data, sufficient for stable transmission and reduced delay for real-time applications, such as, interactive briefing, real-time game, and the like.

### SUMMARY

The object of the present invention is to provide a wireless audiovisual transmission system and method for use in a conference presentation and/or a real-time game environment, if receiving device received a VIP setting of a transmitting device of a specific transmitting end of the at least one transmitting end, the receiving device preferentially decompresses the audiovisual signal outputted by the transmitting device of the specific transmitting end, and preferentially transmits decompressed the audiovisual signal to a display device for display.

Another object of the present invention is to provide a wireless audiovisual transmission system and method for use in a conference presentation and/or a real-time game environment. When the wireless audiovisual transmission system of the present invention is used to perform a wireless audiovisual transmission method, the first step is to perform a startup operation to confirm each transmitting device of at least one transmission end is connected to a receiving device at a receiving end for performing audiovisual signal transmission, wherein the audiovisual signal is a compression-encoded packet image signal; and then, an operation is performed on each transmitting device of the at least one transmission end, a user can use gesture and/or voice to control each transmitting devices of the at least one transmission end, to operate each transmitting device and/or set/deactivate the VIP setting; and then, the displaying is performed, the receiving device of the receiving end can receive the audiovisual signal outputted by each transmitting device from the at least one transmitting end in a wireless manner, wherein if the receiving device of the receiving end receives a VIP setting of a specific transmitting end of the at least one transmitting end, the receiving device preferentially decompresses the audiovisual signal outputted by the transmitting device of the specific transmitting end, and preferentially transmits decompressed the audiovisual signal to a display device for display, until the receiving device at the receiving end receives a VIP deactivation from the transmitting device of the specific transmitting end of the at least one transmitting end, if no VIP setting is received, the receiving device of the receiving end decompresses the at least a received audiovisual signal from at least one transmitting end according to a priority order and the decompressed audiovisual signal is outputted to the display device for displaying.

The wireless audiovisual transmission system of the present invention can deeply optimize the wireless transmission technology, and can transmit a large amount of data generated by using an audiovisual compression format, which achieves stable transmission to less than 100Mbps, latency can also be reduced to less than 100ms, so this technology can be used for many real-time applications, such as, briefing interaction, real-time games, and so on.

To achieve the above object, the present invention provides a wireless audiovisual transmission system, comprising: at least one transmitting device, each transmitting device receiving an audiovisual signal conforming to at least one of Type-C, HDMI, and USB interfaces, and outputting the audiovisual signal conforming to a wireless a transmission protocol, such as an IEEE 802.11ac communication protocol, 100 Mbps; and a receiving device, to receive the audiovisual signals outputted by each transmitting device, and selectively outputting the audiovisual signal from a transmitting device conforming to Type-C, HDMI, and USB interfaces to a display device; wherein each transmitting device first paired with the receiving device to select a transmission channel and adjust WMM parameters, MCS and packet retransmission mechanism, and the receiving device detecting display coefficients of the display device and transmitting the display coefficients of the display device to each transmitting device; and each transmitting device adjusting compression ratio and frame rate of the audiovisual signal according to the display coefficients and the transmission mode of the audiovisual signal to output the audiovisual signal.

The transmitting device comprises a sensing/control module, an audiovisual receiving module, an image compression/packetization module, and a wireless transmission module; the sensing/control module senses user's gesture control and/or voice control to perform operation, such as, start/stop, pause/resume, menu, exit menu, and so on, on the transmitting device.

Audiovisual receiving module: the audiovisual receiving module cooperates with the sensing/control module, so that the transmitting device can perform operations, such as, start/stop, pause/resume, menu, exit menu, and so on, receives an audiovisual signal conforming to at least one of Type-C, HDMI, and USB interfaces, and transmits the audiovisual signal to the image compression/packetization module.

Image compression/packetization module: after receiving the audiovisual signal from the audiovisual receiving module, the image compression/packetization module performs compression and encoding on the audiovisual signal, such as, MJPEG encoding, and performs packetization to match subsequent IEEE 802.11ac-compliant packet transmission, or image compression format is Motion-JPEG, 1080p 30fps; the image compression/packetization module transmits the compressed encoded audiovisual signal to the wireless transmission module.

Wireless transmission module: the wireless transmission module transmits the compressed and encoded audiovisual signal in packets in accordance with the IEEE 802.11ac protocol to the receiving device.

The receiving device comprises a wireless receiving module, a packet processing/image decompression module, and an audiovisual output module.

Wireless receiving module: the wireless receiving module of the receiving device receives the audiovisual signal in compressed and encoded packets conforming to, for example, the IEEE 802.11ac communication protocol, 100 Mbps or the WPA2-PSK encryption type, and transmits the received audiovisual signal to the packet processing/image decompression module.

Packet processing/image decompression module: the packet processing/image decompression module performs packet processing on the received audiovisual signal, performs decompression on the audiovisual signals, and transmits the processed audiovisual signal to the audiovisual output module.

Audiovisual output module: the audiovisual output module outputs the audiovisual signal conforming to at least one of Type-C, HDMI, and USB interfaces to the display device.

Herein, the wireless transmission architecture of the transmitting device and the receiving device is, for example, an 802.11ac (5G), 100 Mbps, or WPA2-PSK encryption type.

Moreover, depending on the actual application, the receiving device can be configured to comprise an audio module of audio out and an HDMI switch module able to accept an external image source.

When the wireless audiovisual transmission system of the present invention is used to perform the wireless audiovisual transmission method, the first step is to perform an activation operation to confirm that each transmitting device of the at least one transmission end is connected to a receiving device of a receiving end for performing audiovisual signals transmitting, wherein the audiovisual signal is a compression-encoded packet image signal; and then performing an operation, an operation is performed on each transmitting device of the at least one transmission end, a user can use gesture and/or voice to control each transmitting devices of the at least one transmission end, to operate each transmitting device and/or set/deactivate the VIP setting; and then, the displaying is performed, the receiving device of the receiving end can receive the audiovisual signal outputted by each transmitting device from the at least one transmitting end in a wireless manner, wherein if the receiving device of the receiving end receives a VIP setting of a specific transmitting end of the at least one transmitting end, the receiving device preferentially decompresses the audiovisual signal outputted by the transmitting device of the specific transmitting end, and preferentially transmits decompressed the audiovisual signal to a display device for display, until the receiving device at the receiving end receives a VIP deactivation from the transmitting device of the specific transmitting end of the at least one transmitting end, if no VIP setting is received, the receiving device of the receiving end decompresses the at least a received audiovisual signal from at least one transmitting end according to a priority order and the decompressed audiovisual signal is outputted to the display device for display.

Moreover, the wireless audiovisual transmission method further comprises: when the receiving device of the receiving end receives the VIP setting of the transmitting device of the specific transmitting end, the receiving device of the receiving end uses a light indicator to display a first instruction; and when the receiving device of the receiving end receives the VIP deactivation of the transmitting device of the specific transmitting end, and the receiving device of the receiving end uses the light indicator to display a second instruction.

Moreover, the audiovisual signal is an audio, image or an audiovisual program.

The foregoing will become better understood from a careful reading of a detailed description provided herein below with appropriate reference to the accompanying drawings.

### BRIEF DESCRIPTION OF THE DRAWINGS

The embodiments can be understood in more detail by reading the subsequent detailed description in conjunction with the examples and references made to the accompanying drawings, wherein:
FIG. 1 is a schematic view showing the structure and operation of the wireless audiovisual transmission system according to the present invention;
FIG. 2 is a flowchart showing the use of the wireless audiovisual transmission system of the present invention in FIG. 1 to perform wireless audiovisual transmission method;
FIG. 3 is a schematic view showing the structure and operation of the wireless audiovisual transmission system according to an embodiment of the present invention;
FIG. 4 is a flowchart showing the use of the wireless audiovisual transmission system of an embodiment of the present invention in FIG. 3 to perform wireless audiovisual transmission method;
FIGs. 5A-5C are schematic views showing the use of the wireless audiovisual transmission system of an embodiment of the present invention in FIG. 3;
FIGs. 6A-6B are a flowchart showing the use of the receiving device at the receiving end of the wireless audiovisual transmission system of an embodiment of the present invention to display wireless audiovisual transmission with light indicator.

### DETAILED DESCRIPTION OF THE DISCLOSED EMBODIMENTS

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

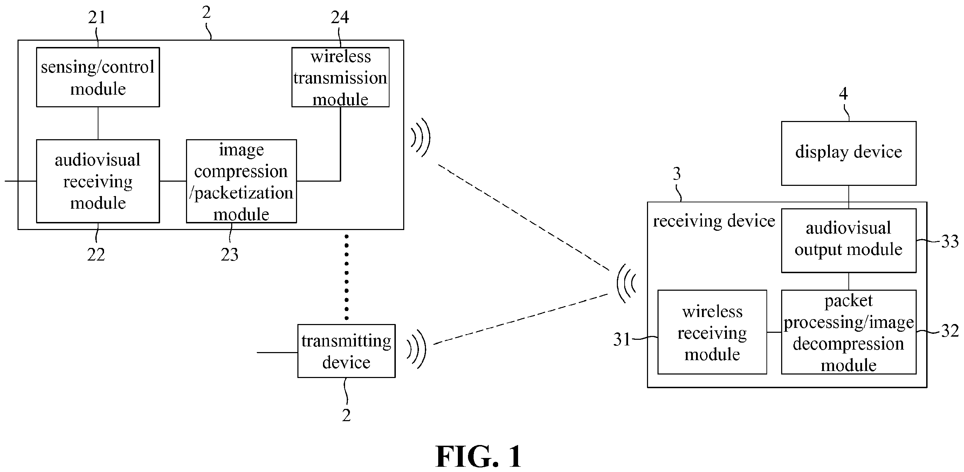

FIG. 1 is a schematic view showing the structure and operation of the wireless audiovisual transmission system according to the present invention. As shown in FIG. 1, the wireless audiovisual transmission system 1 comprises: at least one transmitting device 2, each transmitting device 2 receiving an audiovisual signal conforming to at least one of Type-C, HDMI, and USB interfaces, and outputting the audiovisual signal conforming to a wireless a transmission protocol, such as an IEEE 802.11ac communication protocol, 100 Mbps; and a receiving device 3, to receive the audiovisual signals outputted by each transmitting device 2, and selectively outputting the audiovisual signal from a transmitting device 2 conforming to Type-C, HDMI, and USB interfaces to a display device 4; wherein each transmitting device 2 first paired with the receiving device 3 to select a transmission channel and adjust WMM parameters, MCS and packet retransmission mechanism, and the receiving device 3 detecting display coefficients of the display device 4 and transmitting the display coefficients of the display device 4 to each transmitting device 2; and each transmitting device 2 adjusting compression ratio and frame rate of the audiovisual signal according to the display coefficients and the transmission mode of the audiovisual signal to output the audiovisual signal.

The transmitting device 2 comprises a sensing/control module 21, an audiovisual receiving module 22, an image compression/packetization module 23, and a wireless transmission module 24.

Sensing/control module 21: the sensing/control module 21 senses user's gesture control and/or voice control to perform operation, such as, start/stop, pause/resume, menu, exit menu, and so on, on the transmitting device 2.

Audiovisual receiving module 22: the audiovisual receiving module 22 cooperates with the sensing/control module 21, so that the transmitting device 2 can perform operations, such as, start/stop, pause/resume, menu, exit menu, and so on, receives an audiovisual signal conforming to at least one of Type-C, HDMI, and USB interfaces, and transmits the audiovisual signal to the image compression/packetization module 23.

Image compression/packetization module 23: after receiving the audiovisual signal from the audiovisual receiving module 22, the image compression/packetization module 23 performs compression and encoding on the audiovisual signal, such as, MJPEG encoding, and performs packetization to match subsequent IEEE 802.11ac-compliant packet transmission, or image compression format is Motion-JPEG, 1080p 30fps; the image compression/packetization module 23 transmits the compressed encoded audiovisual signal to the wireless transmission module 24.

Wireless transmission module 24: the wireless transmission module 24 transmits the compressed and encoded audiovisual signal in packets in accordance with the IEEE 802.11ac protocol to the receiving device 3.

The receiving device 3 comprises a wireless receiving module 31, a packet processing/image decompression module 32, and an audiovisual output module 33.

Wireless receiving module 31: the wireless receiving module 31 of the receiving device 3 receives the audiovisual signal in compressed and encoded packets conforming to, for example, the IEEE 802.11ac communication protocol, 100 Mbps or the WPA2-PSK encryption type, and transmits the received audiovisual signal to the packet processing/image decompression module 32.

Packet processing/image decompression module 32: the packet processing/image decompression module 32 performs packet processing on the received audiovisual signal, performs decompression on the audiovisual signals, and transmits the processed audiovisual signal to the audiovisual output module 33.

Audiovisual output module 33: the audiovisual output module 33 outputs the audiovisual signal conforming to at least one of Type-C, HDMI, and USB interfaces to the display device 4. Herein, the wireless transmission architecture of the transmitting device 2 and the receiving device 3 is, for example, an 802.11ac (5G), 100 Mbps, or WPA2-PSK encryption type. Moreover, depending on the actual application, the receiving device 3 can be configured to comprise an audio module of audio out and an HDMI switch module able to accept an external image source.

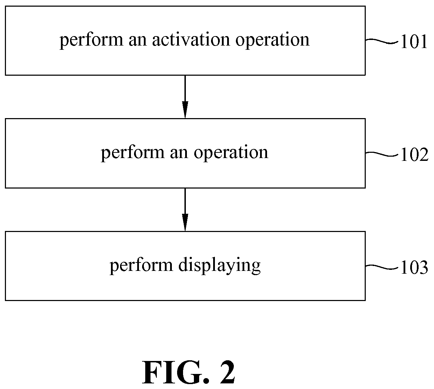

FIG. 2 is a flowchart showing the use of the wireless audiovisual transmission system of the present invention in FIG. 1 to perform wireless audiovisual transmission method. As shown in FIG. 2, Step 101 is to perform an activation operation to confirm that each transmitting device 2 of the at least one transmission end is connected to a receiving device 3 of a receiving end for performing audiovisual signals transmitting, wherein the audiovisual signal is a compression-encoded packet image signal; and then proceed to Step 102.

Step 102: performing an operation: an operation is performed on each transmitting device 2 of the at least one transmission end, a user can use gesture and/or voice to control each transmitting device 2 of the at least one transmission end, to operate each transmitting device 2 and/or set/deactivate the VIP setting, and proceed to Step 103.

Step 103: performing the displaying: the receiving device 3 of the receiving end can receive the audiovisual signal outputted by each transmitting device 2 from the at least one transmitting end in a wireless manner, wherein if the receiving device 3 of the receiving end receives a VIP setting of a specific transmitting device 2 of the at least one transmitting end, the receiving device 3 preferentially decompresses the audiovisual signal outputted by the transmitting device 2 of the specific transmitting end, and preferentially transmits decompressed the audiovisual signal to a display device 4 for display, until the receiving device 3 at the receiving end receives a VIP deactivation from the transmitting device 2 of the specific transmitting end of the at least one transmitting end, if no VIP setting is received, the receiving device 3 of the receiving end decompresses the at least a received audiovisual signal from at least one transmitting end according to a priority order and the decompressed audiovisual signal is outputted to the display device 4 for display.

Wherein, the wireless audiovisual transmission method further comprises: in Step 102, the wireless audiovisual transmission method further comprises: when the receiving device 3 of the receiving end receives the VIP setting of the transmitting device 2 of the specific transmitting end, the receiving device 3 of the receiving end uses a light indicator to display a first instruction; and when the receiving device 3 of the receiving end receives the VIP deactivation of the transmitting device 2 of the specific transmitting end, and the receiving device 3 of the receiving end uses the light indicator to display a second instruction.

Whether as shown in FIG. 1 or FIG. 2, the wireless audiovisual transmission method of the present invention is a wireless audiovisual transmission method with a VIP mechanism for simultaneously transmitting a plurality of audiovisual signals to a device at the same time. The technical design comprises a VIP prevention mechanism using VIP setting and VIP deactivation to adjust the display order of a plurality of audiovisual signals. The application field of the present technology is a place with a need for a plurality of audiovisual transmissions, for example, an office briefing with multi-participants but only one person can display the audiovisual signal at a time.

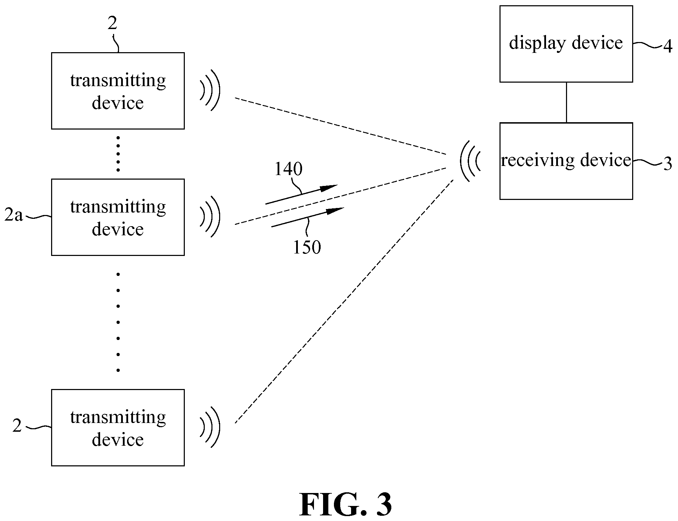

FIG. 3 is a schematic view showing the structure and operation of the wireless audiovisual transmission system according to an embodiment of the present invention. As shown in FIG. 3, the receiving device 3 of the receiving end wirelessly receives the audiovisual signal outputted by each transmitting device 2 of the at least one transmitting end, and selectively outputs the audiovisual signal of one of the at least one transmitting device 2 of the transmitting end to a display 4. The user of the specific transmitting device 2a can operate the specific transmitting device 2a with at least one of a gesture control and a sound control, and can perform the VIP setting 140 and VIP deactivation 150.

The receiving device 3 at the receiving end receives the VIP setting 140 of a specific transmitting device 2a to output the audiovisual signal of the specific transmitting device 2a to the display device 4; the receiving device 3 of the receiving end receives the transmitted VIP setting 140 from the specific transmitting device 2a preferentially decompresses the audiovisual signal outputted by the specific transmitting device 2a, and preferentially outputs the decompressed audiovisual signal to the display device 4 for displaying, until the receiving device 3 of the receiving end receives the VIP deactivation 150 transmitted by the specific transmitting device 2a; if no VIP setting 140 is received, the receiving device 3 of the receiving end decompresses the at least a received audiovisual signal from at least one transmitting device 3 according to a priority order and the decompressed audiovisual signal is outputted to the display device 4 for displaying.

The transmitting device 2 comprises a sensing/control module 21, an audiovisual receiving module 22, an image compression/packetization module 23, and a wireless transmission module 24.

Sensing/control module 21: the sensing/control module 21 senses user's gesture control and/or voice control to perform operation on the specific transmitting device 2a to generate a VIP setting 140 or a VIP deactivation 150.

Audiovisual receiving module 22: the audiovisual receiving module 22 cooperates with the sensing/control module 21, so that the transmitting device 2 can perform operations, such as, start/stop, pause/resume, menu, exit menu, and so on, receives an audiovisual signal conforming to at least one of Type-C, HDMI, and USB interfaces, and transmits the audiovisual signal to the image compression/packetization module 23.

Image compression/packetization module 23: after receiving the audiovisual signal from the audiovisual receiving module 22, the image compression/packetization module 23 performs compression and encoding on the audiovisual signal, such as, MJPEG encoding, and performs packetization to match subsequent IEEE 802.11ac-compliant packet transmission, or image compression format is Motion-JPEG, 1080p 30fps; the image compression/packetization module 23 transmits the compressed encoded audiovisual signal to the wireless transmission module 24.

Wireless transmission module 24: the wireless transmission module 24 transmits the compressed and encoded audiovisual signal in packets in accordance with the IEEE 802.11ac protocol to the receiving device 3.

The receiving device 3 comprises a wireless receiving module 31, a packet processing/image decompression module 32, and an audiovisual output module 33.

Wireless receiving module 31: the wireless receiving module 31 of the receiving device 3 receives the audiovisual signal in compressed and encoded packets conforming to, for example, the IEEE 802.11ac communication protocol, 100 Mbps or the WPA2-PSK encryption type, and transmits the received audiovisual signal to the packet processing/image decompression module 32.

Packet processing/image decompression module 32: the packet processing/image decompression module 32 performs packet processing on the received audiovisual signal, performs decompression on the audiovisual signals, and transmits the processed audiovisual signal to the audiovisual output module 33.

Audiovisual output module 33: the audiovisual output module 33 outputs the audiovisual signal conforming to at least one of Type-C, HDMI, and USB interfaces to the display device 4.

Herein, the wireless transmission architecture of the transmitting device 2 and the receiving device 3 is, for example, an 802.11ac (5G), 100 Mbps, or WPA2-PSK encryption type.

Moreover, depending on the actual application, the receiving device 3 can be configured to comprise an audio module of audio out and an HDMI switch module able to accept an external image source.

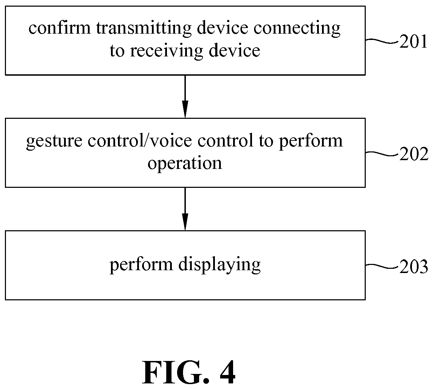

FIG. 4 is a flowchart showing the use of the wireless audiovisual transmission system of an embodiment of the present invention in FIG. 3 to perform wireless audiovisual transmission method. A shown in FIG. 4, Step 201 is to perform an activation operation to confirm that each transmitting device 2, 2a of the at least one transmission end is connected to a receiving device 3 of a receiving end for performing audiovisual signals transmitting, wherein the audiovisual signal is a compression-encoded packet image signal; and then proceed to Step 202.

Step 202: performing an operation: an operation is performed on each transmitting device 2, 2a of the at least one transmission end, a user can use gesture and/or voice to control the specific transmitting device 2a, to operate the specific transmitting device 2a and/or set VIP setting 140 or VIP deactivation 150, and proceed to Step 203.

Step 203: performing the displaying: the receiving device 3 of the receiving end can receive the audiovisual signal outputted by each transmitting device 2, 2a from the at least one transmitting end in a wireless manner, wherein if the receiving device 3 of the receiving end receives a VIP setting 140 of the specific transmitting device 2a, the receiving device 3 preferentially decompresses the audiovisual signal outputted by the specific transmitting device 2a, and preferentially transmits decompressed the audiovisual signal to a display device 4 for display, until the receiving device 3 at the receiving end receives a VIP deactivation 150 from the specific transmitting device 2a, if no VIP setting 140 is received, the receiving device 3 of the receiving end decompresses the at least a received audiovisual signal from at least one transmitting end according to a priority order and the decompressed audiovisual signal is outputted to the display device 4 for display.

Wherein, the wireless audiovisual transmission method further comprises: in Step 202, the wireless audiovisual transmission method further comprises: when the receiving device 3 of the receiving end receives the VIP setting 140 of the specific transmitting device 2a, the receiving device 3 of the receiving end uses a light indicator to display a first instruction; and when the receiving device 3 of the receiving end receives the VIP deactivation 150 of the specific transmitting device 2a, the receiving device 3 of the receiving end uses the light indicator to display a second instruction.

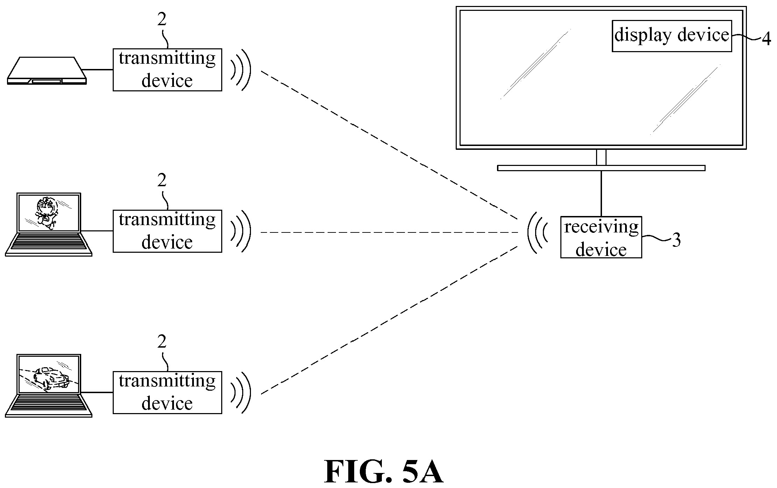

FIGs. 5A-5C are schematic views showing the use of the wireless audiovisual transmission system of an embodiment of the present invention in FIG. 3. As shown in the figures, the transmitting devices 2, 2a are connected respectively to a digital multi-function video disc player, a notebook computer, and so on, to output audiovisual signals, and the display device 4 is a panel display.

FIG. 5A shows the receiving device 3 of the receiving end wirelessly receives the audiovisual signals of one of the transmitting devices 2 connected to the transmitting end of the DVD player, the notebook computer, and so on, to a display device 4

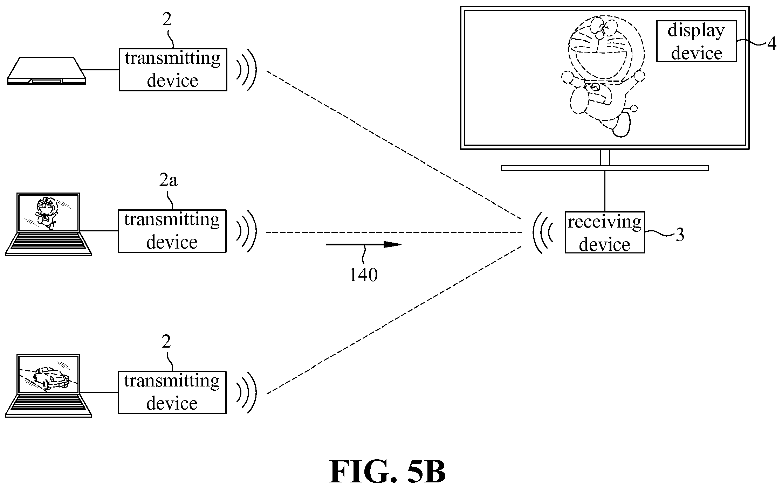

FIG. 5B shows the receiving device 3 at the receiving end receives the VIP setting 140 of a specific transmitting device 2a, and outputs the audiovisual signal of the specific transmitting device 2a connected to the notebook computer to the display device 4.

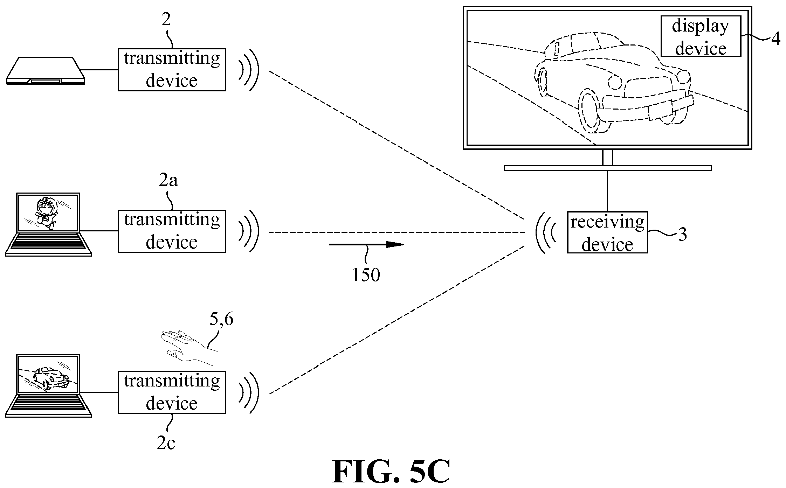

FIG. 5C shows after receiving the VIP deactivation 150 of the specific transmitting device 2a, the receiving device 3 of the receiving end outputs the audiovisual signal of a notifying transmitting device 2c to the display device 4 via the notification of one of the at least one transmitting end.

In actual implementation, the audiovisual signal may be, for example, an audio, an image, or an audiovisual program. As also shown in FIG. 5C, the notification of one of the transmitting ends can be performed by, for example, the user of the notifying transmitting end using at least one of the gesture control and the sound control.

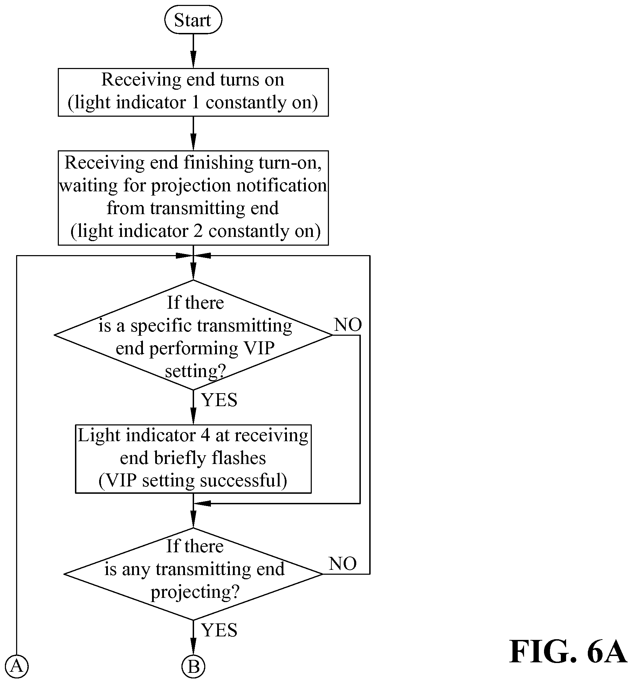

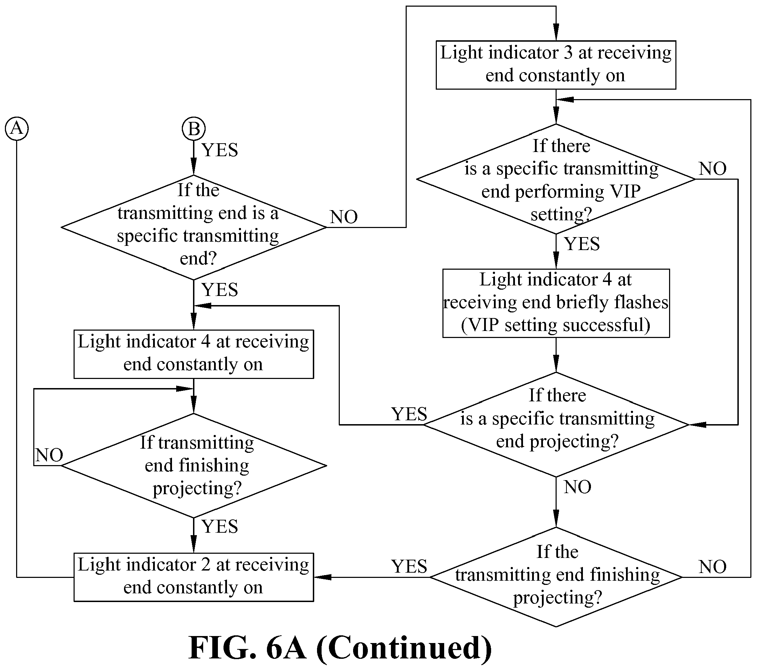

FIGs. 6A-6B are a flowchart showing the use of the receiving device at the receiving end of the wireless audiovisual transmission system of an embodiment of the present invention to display wireless audiovisual transmission with light indicator. As shown in FIGs. 6A-6B, the wireless video transmission system and method may further comprise: when the receiving device 3 of the receiving end receives the VIP setting 140 of the specific transmitting device 2a, the receiving device 3 of the receiving end uses a light indicator to display a first instruction; and when the receiving device 3 of the receiving end receives the VIP deactivation 150 of the specific transmitting device 2a, the receiving device 3 of the receiving end uses the light indicator to display a second instruction. The use of a light indicator to indicate the states of first instruction and the second instruction of the transmitting device 2, 2a of the transmitting end and the receiving device 3 of the receiving end can be expOlained in FIGs. 6A-6B.

FIGs. 6A-6B show the operation flow of the receiving device 3 of the receiving end and the transmitting device 2, 2a of the transmitting end, respectively. In FIGs. 6A-6B, the receiving device 3 of the receiving end and the transmitting devices 2, 2a at the transmitting end each have different message light indicator to indicate respective states, and the user can control, by gestures 5, 6 and/or voice, the specific transmitting device 2a to generate a VIP setting and/or a VIP deactivation 150. The user can also use the gestures 5, 6 and/or voice to perform the operations of start/stop, pause/resume, menu, exit menu, and so on, on the transmitting devices 2, 2a. For example, a projection is used to indicate the audiovisual signal of the transmitting devices 2, 2a of the transmitting end is outputted the display device 4.

As shown in FIG. 6A, The receiving device 3 at the receiving end first checks the connection to the transmitting devices 2, 2a that are turned on by the user with gesture control and/or voice control, and waiting for the transmitting end. Then, the receiving device checks whether a VIP setting 140 from a specific transmission terminal 2a is received to perform the projection of the specific transmission device 2a, or is ready to receive a notification from the transmitting device 2 of at least one transmitting end (the user performs projection with gestures 5, 6 and/or voice control) to perform the projection of the transmitting end 2, 2a of the notifying transmitting end.

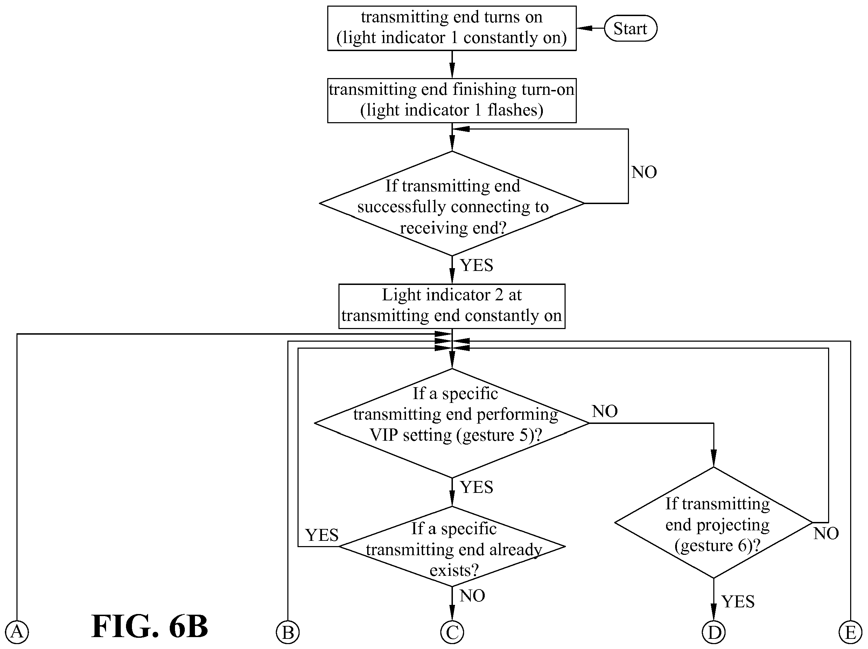

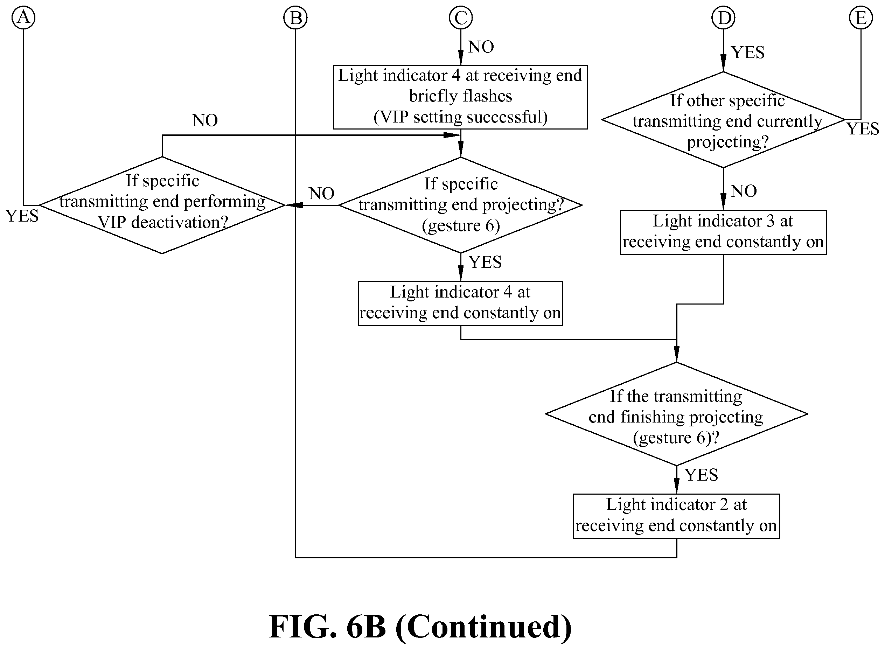

As shown in FIG. 6B, the transmitting device 2, 2a of the transmitting end first checks the turn-on (the user operates with gestures 5, 6 and/or sound control) and smooth connection to the receiving end. Then, the receiving device checks the VIP setting 140 of a specific transmission device 2a to perform projection of the specific transmission device 2a, and checks whether there is a VIP deactivation 150 from the specific transmission device 2a to perform projection of the other transmission device 2 at the transmission end.

The present invention discloses a wireless audiovisual transmission system and method. The technical design comprises a VIP prevention mechanism using VIP setting and VIP deactivation to adjust the display order of a plurality of audiovisual signals.

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1. A wireless audiovisual transmission method, applicable to a conference presentation or a real-time game environment, comprising the following steps:
performing an activation operation, to confirm that each transmitting device of at least one transmission end being connected to a receiving device of a receiving end for performing audiovisual signals transmitting, wherein the audiovisual signal being a compression-encoded packet image signal;
performing an operation: at each transmitting device of the at least one transmission end, a user using gesture and/or voice to control each transmitting device of the at least one transmission end, to operate each transmitting device, set VIP setting or VIP deactivation;
performing displaying: the receiving device of the receiving end receiving an audiovisual signal outputted by each transmitting device from the at least one transmitting end in a wireless manner.

2. The wireless audiovisual transmission method as claimed in claim 1, wherein if the receiving device of the receiving end receives a VIP setting of a specific transmitting device of the at least one transmitting end, the receiving device preferentially decompresses the audiovisual signal outputted by the transmitting device of the specific transmitting end, and preferentially transmits decompressed the audiovisual signal to a display device for displaying, until the receiving device at the receiving end receives a VIP deactivation from the transmitting device of the specific transmitting end of the at least one transmitting end.

3. The wireless audiovisual transmission method as claimed in claim 1 or claim 2, wherein if the receiving device of the receiving end receives no VIP setting, the receiving device of the receiving end decompresses at least a received audiovisual signal from at least one transmitting end according to a priority order and the decompressed audiovisual signal is outputted to the display device for displaying.

4. A wireless audiovisual transmission method, applicable to a conference presentation or a real-time game environment, comprising the following steps:
a receiving device of a receiving end receiving an audiovisual signal outputted by each transmitting device from at least one transmitting end in a wireless manner; and selectively one of the audiovisual signals outputted by each transmitting device from at least one transmitting end to a display device;
wherein if the receiving device of the receiving end receiving a VIP setting of a specific transmitting device of the at least one transmitting end generated by a user with gesture control or voice control, the receiving device outputting the audiovisual signal outputted by the specific transmitting device to the display device; after the receiving device of the receiving end receiving a VIP deactivation of the specific transmitting device, the receiving device of the receiving end decompressing at least a received audiovisual signal from at least one transmitting end according to a priority order and the decompressed audiovisual signal being outputted to the display device for displaying.

5. A wireless audiovisual transmission system, applicable to a conference presentation or a real-time game environment, comprising:
at least one transmitting device, each transmitting device receiving an audiovisual signal conforming to at least one of Type-C, HDMI, and USB interfaces, and outputting the audiovisual signal conforming to a wireless a transmission protocol, such as an IEEE 802.11ac communication protocol, 100 Mbps; and
a receiving device, to receive the audiovisual signals outputted by each transmitting device, and selectively outputting the audiovisual signal from a transmitting device conforming to Type-C, HDMI, and USB interfaces to a display device.

6. The wireless audiovisual transmission system as claimed in claim 5, wherein each transmitting device is first paired with the receiving device to select a transmission channel and adjust WMM parameters, MCS and packet retransmission mechanism, and the receiving device detects display coefficients of the display device and transmitting the display coefficients of the display device to each transmitting device; and each transmitting device adjusts compression ratio and frame rate of the audiovisual signal according to the display coefficients and the transmission mode of the audiovisual signal to output the audiovisual signal.

7. The wireless audiovisual transmission system as claimed in claim 5, wherein the transmitting device comprises:
a sensing/control module, the sensing/control module senses user's gesture control and/or voice control to perform operation, such as, start/stop, pause/resume, menu, exit menu, and so on, on the transmitting device;
an audiovisual receiving module, the audiovisual receiving module cooperates with the sensing/control module, so that the transmitting device can perform operations, such as, start/stop, pause/resume, menu, exit menu, and so on, receives an audiovisual signal conforming to at least one of Type-C, HDMI, and USB interfaces, and transmits the audiovisual signal;
an image compression/packetization module, after receiving the audiovisual signal from the audiovisual receiving module, the image compression/packetization module performs compression and encoding on the audiovisual signal, and transmits the compressed and encoded audiovisual signals; and
a wireless transmission module; the wireless transmission module transmits the compressed and encoded audiovisual signal in packets in accordance with the IEEE 802.11ac protocol to the receiving device.

8. The wireless audiovisual transmission system as claimed in claim 7, wherein the receiving device comprises:
a wireless receiving module, the wireless receiving module receives the audiovisual signal in compressed and encoded packets conforming to the IEEE 802.11ac communication protocol, 100 Mbps or the WPA2-PSK encryption type, and transmits the received audiovisual signal;
a packet processing/image decompression module, the packet processing/image decompression module performs packet processing on the received audiovisual signal, performs decompression on the audiovisual signals, and transmits the processed audiovisual signal;
an audiovisual output module, the audiovisual output module outputs the audiovisual signal conforming to at least one of Type-C, HDMI, and USB interfaces to the display device.

9. The wireless audiovisual transmission system as claimed in claim 8, wherein the wireless transmission architecture of the transmitting device and the receiving device is at least one of 802.11ac (5G), 100 Mbps, or WPA2-PSK encryption type.
